# EUROPEAN PATENT APPLICATION

(11) **EP 1 387 529 A1**
(43) Date of publication of application: **04.02.2004**
(21) Application number: 02425485.6
(22) Date of filing: 24.07.2002
(51) Int. Cl.: H04L 12/28, H04L 12/56, H04M 11/00

(54) **A method for management and control of domestic and industrial peripherals**

(71) Applicant: Thermital Spa, 31040 Volpago del Montello (TV) (IT)
(72) Inventor: Peruzzi, Francesco, 35141 Padova (IT); Stella, Silvio Rudy, 36061 Bassano del Grappa (VI) (IT)
(74) Representative: Bonini, Ercole

(57) **Abstract**

A network (1, 100, 200, 300) of a peripheral (3) for residential and/or industrial complexes of the type which comprises: at least one electronic device (2) associated to each of said peripherals (3) for the acquisition and sending of command signals to the peripherals (3) connected to a service center (4) and to a management and control center (5). The electronic device (2) has storage means (13) of the signals coming from the peripheral (3) and storage means (14) of data modifiable by commands coming from the management and control center (5). One of the management and control methods of the network (1) provides transmitting the messages from the electronic device (2) to the service center (4) that conveys them to the management and control center (5), which identifies, decodes, and stores the message's sender and possibly transmits a message to the electronic device (2).

## Description

The invention relates to a peripherals' network for residential and/or industrial complexes where for peripherals is meant any kind of apparatus or its part that has some pre-settable control automatisms in order to achieve a certain performance.

With an explanatory but not limiting intent, a peripheral could consist of a boiler connected to a heating plant, or also of an air conditioner or else, for example, of an alarm system, of a domestic watering system, of a gas leaks detecting device, and so on.

Management and control systems operating mostly in the field of heating plants and even more in that of high capacity heating plants belong to the known state of the art.

These systems are managed and remote-controlled through electronic devices connected to each peripheral which are generally of the complex kind because they are built in order to be interfaced with a certain type of apparatus, but usually they are not fit to manage and control an apparatus different from that which they have been built for.

Such electronic devices have an autonomous ability of acquisition and processing of the received data and for this reason they are equipped with data processing and storage functions such to allow their analysis and prospective command functions of equipments connected to the peripheral in case of deviation from the preset parameters. All of this involves such complexity which makes it not at all cost effective.

Furthermore, as already anticipated these kinds of electronic devices are particularly fit to manage a certain type of peripheral and are not suitable instead for the management of peripherals with different characteristics.

According to the earlier state of the art, the replacement of a certain model of boiler with a different one, even if it is an upgraded model of the same manufacturer, sometimes requires the need of replacing the managing electronic device that controls such boiler.

Obviously, if the boiler that gets replaced belongs to a different manufacturer it is even more evident how it is impossible to use the same electronic device for its management and control.

Also according to the earlier state of the art, these electronic devices applied to the peripherals as cooling or heating units can be inquired via GSM or via computer through the web and are direct user-programmable by the abovementioned means.

Certain systems, in the case of abnormality in the peripheral's operation, provide that the electronic device is able to send an alarm message to the emergency unit which possibly sees to send qualified personnel at the place where to effectively operate according to the received alarm.

Up to now the considerable cost of the management and control devices that run each peripheral, which could be of heating, conditioning or alarm systems, let alone the diversity of apparatuses themselves which need of different artificial intelligences and thus of distinct management and control devices, have prevented the spreading out, in a significant and effective manner, of network systems that carry out in a systematic way the management and control of the previously defined peripherals.

The invention's main object is that of equipping the peripherals to be managed and controlled with an electronic device being of an extremely easy type such to be adjustable and adjusted to any kind of peripheral and hence any kind of apparatus to be managed and controlled.

Moreover, it is looked for that the abovementioned electronic device be inexpensive and has a minimal manufacturing complexity so that it could be reliably and advantageously applied to any new or existing apparatus regardless of its nature, of the kind of manufacturer, of the type of model, and of the sort of function that carries out.

Another object of the invention is that of creating a network of peripherals equipped with the abovementioned electronic device, in order to obtain a good management and control of said peripherals.

A further object of the invention is that of making a network that would allow acquiring information on the area wherein the peripherals are present, information on the state of the residential and/or industrial complexes wherein such apparatuses and said peripherals are installed.

Yet another object which is attainable thanks to the electronic devices applied to the peripherals and with the network created by said peripherals is that of being able to implement in time the services and the quality of the network and the peripherals' management without having to operate in situ on the electronic devices associated to them.

It is also an invention's object that of creating a method that would allow the management and control of said peripherals' network.

Said objects are accomplished by a peripherals' network for residential and/or industrial complexes which, in accordance with the first claim's content, comprises:
- at least one electronic device associated to each of said peripherals equipped with inputs and outputs for the acquisition of signals coming from said peripherals and for the sending of command signals to said peripherals, said electronic device being fit to establish a bidirectional communication of Ethernet or cable transmittable messages with: a service center for the reception, transmission, and management of said messages; and with:

- a service center for the reception, transmission, and management of said messages; and with:

- a data management and control center connected to said service center equipped with reception means of said messages, data processing means, first data storage means, and commands transmission means via Ethernet or cable,
such network being characterized in that said at least one electronic device has second storage means fit to store the signals coming from the peripheral which is associated to, and third storage means of data modifiable through said commands coming from such data management and control center, said third storage means being fit to store the operating parameters of said at least one electronic device.

According to a preferred embodiment, the network comprises one or more access devices for the network's users, which allow a bidirectional communication of Ethernet or cable transmittable messages with the electronic device, with the service center or with the data management and control center.

Always according to a preferred embodiment, the network comprises as well some signalling devices which are connected to an emergency unit, like for example the operative fire station, fit to receive the alarm messages coming from the data management and control center.

The access devices, as also the signalling devices, can usefully consist of a cellular phone where the transmittable messages are SMS.

For such reason, the electronic device connected to the peripherals has inside of it a modem for sending and receiving said SMS messages.

The network thus designed is made operative by a method which allows the integrated management and control of the peripherals, the access devices, the signalling devices, and the synchronization of the information exchanged among them.

Usefully, each electronic device's functions can be modified in remote mode from the management and control center, possibly according to instructions given by the user through its own access device.

Yet usefully, the acquired information from the management and control center coming from each peripheral and stored in the first storage means can be used to generate prospective feedback commands to improve the efficiency of the peripherals installed inside predetermined geographical areas.

Usefully as well, anytime the user can request the activation of specific services, like for example the chrono-thermostat function if the peripheral is a boiler or an air conditioner, through the sending of coded messages to the management and control center which sees to modify the operating parameters of the electronic device of the respective peripheral.

Said objects and advantages will be better highlighted during the description of the invention's preferred embodiments shown in an explanatory but not limiting way, with reference to the annexed drawings wherein:
- Figure 1 is a schematic representation of the invention's network connected to a number of peripherals;
- Figure 2 is a block diagram of the management and control center used in the network of fig. 1;
- Figure 3 is a block diagram of the electronic device of each peripheral of the network of fig. 1;
- Figures 4 to 6 are implementing alternatives of the network of fig. 1.

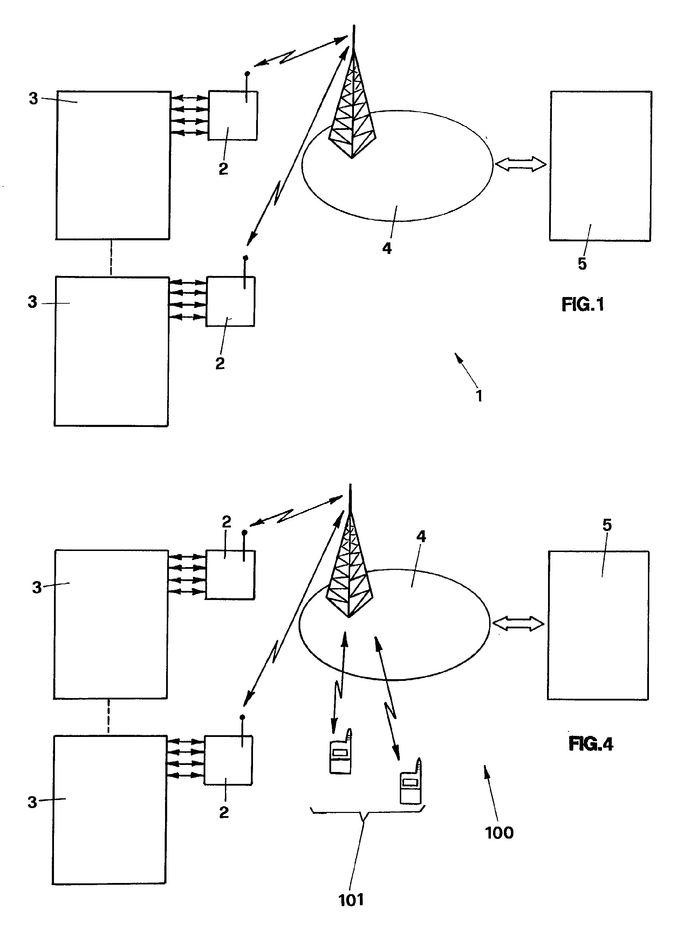

The invented peripherals' network is illustrated in fig. 1 where is generally indicated with the number 1.

In the embodiment here described the peripherals will be considered as consisting of a heating plant, a boiler for example, equipped with heating and sanitary water temperature measuring devices, such as for example thermostats and manostats, and actuators, like solenoid valves or relays.

In different embodiments, the peripherals could be consisting of other measuring devices such as proximity sensors, presence sensors, photoelectric cells or any other physical magnitudes measuring device, like anemometer, voltmeter, ammeter, and others.

Thus, for example, the network could be used in alarm systems, fireproof systems, remote measurement systems, and remote emergency call or alike.

Referring to fig. 1, the invention's network 1 basically consists of a number of electronic devices 2, each connected to a corresponding peripheral 3, of a service center 4 communicating with each electronic device 2 and a data management and control center 5 communicating with the service center 4.

Regarding the communication between the electronic device 2 and the service center 4, as also between the service center 4 and the management and control center 5, it is carried out through methods of Ethernet or cable transmission of the known kind and widely used in the field of telecommunication.

During the description, for sake of simplicity, the communication between the electronic device 2 and the service center 4 will be considered as via radio link, while the connection between the service center 4 and the management and control center 5 will be considered as via fixed phone network.

For such reason, the electronic devices 2, the service center 4, and the management and control center 5 are each equipped with appropriate modems that allow sending and receiving messages according to the standard protocols used in telecommunications.

In a different embodiment, the communication could be carried out through the use of the Internet or Intranet.

In the case of the example of fig. 1 the service center 4 advantageously consists of a mobile phone manager.

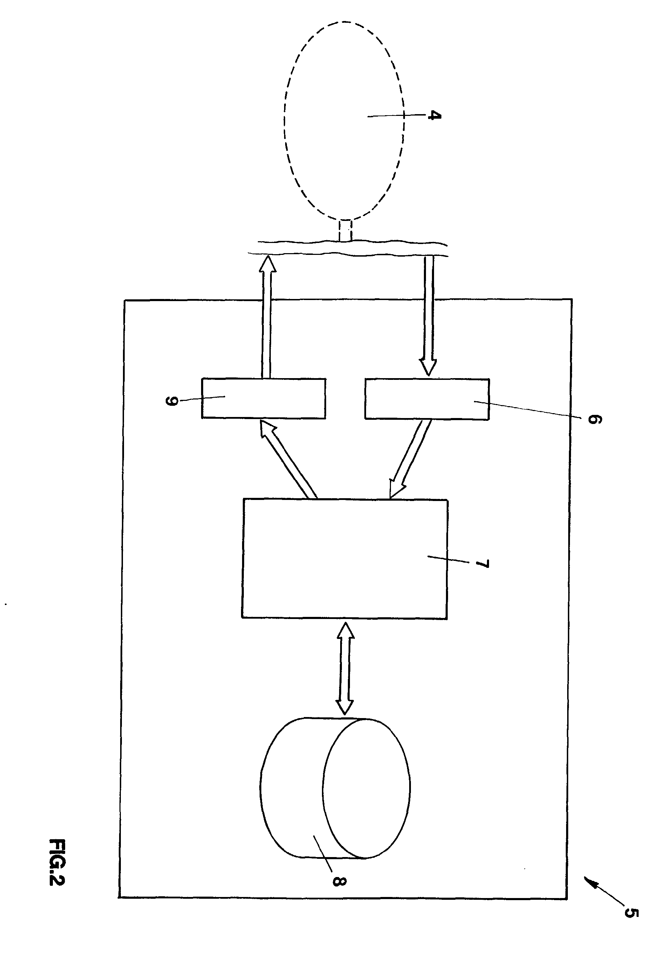

Regarding the data management and control center 5, it is equipped, as shown in fig. 2, with reception means 6 of the messages coming from the service center 4, with processing means 7 of such messages, with first storage means 8 and transmission means 9 for the sending of commands via Ethernet and/or cable.

The first data storage means 8 contain the key data received and processed by the processing means 7 and represent an information database relative to the network 1 and specifically of the information relative to each peripheral 3, as it will be better shown later on.

Regarding the electronic device 2, it can be an integral part of the peripheral 3, for example for the installations made with new technologies, or it can be preferably applied with simple operations to the preinstalled peripherals belonging to the earlier state of the art.

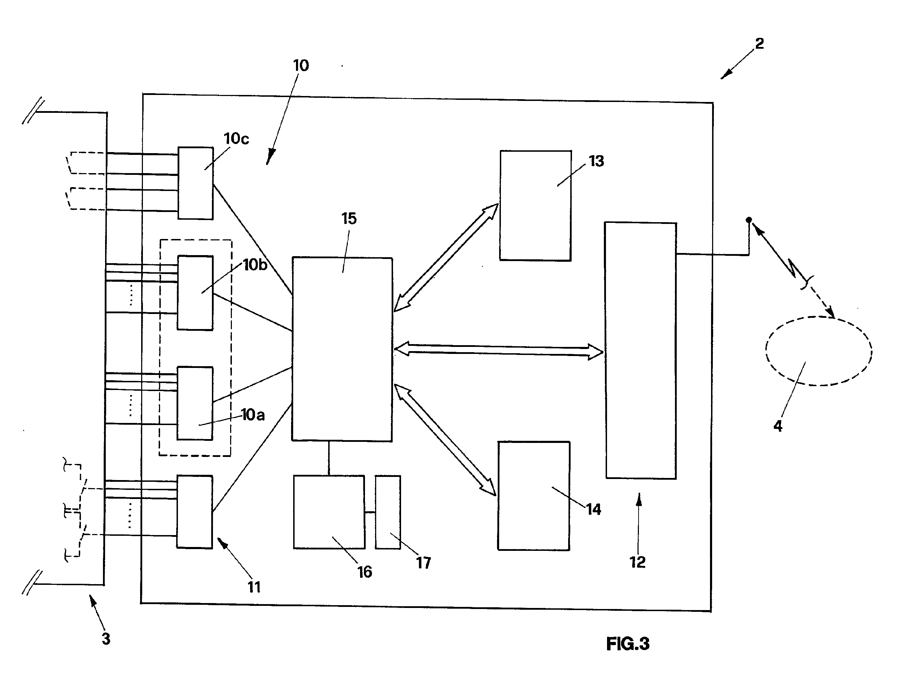

As a matter of fact, the electronic device 2, as viewed in fig. 3, has a number of inputs, generally indicated with the number 10, for the connection to the peripheral 3 and bidirectional communication means, generally indicated with the number 12, for the Ethernet and/or cable transmission of messages towards the service center 4. Regarding the inputs 10, they can be mainly divided into digital inputs 10a and analog inputs 10b for the acquisition of low tension digital and analog signals, and ON-OFF inputs 10c, for example connected to the relay's contacts belonging to the peripheral 3.

Similarly with regard to the outputs 11, they can be connected to the relay's contacts belonging to the peripheral 3, as illustrated in the figure 3, or to digital or analog inputs of possible pre-existing control boards on the peripheral 3 itself.

It is obvious that the inputs 10 and the outputs 11 of the electronic device 2 allows its easy interfacing with the peripheral 3, it being of the new generation or of the traditional type.

Especially, the digital inputs 10a and the analog inputs 10b can be used for the connection to detecting devices of the known kind, like probes or transducers, which indeed output digital or analog signals.

For such reason, an interface module is usefully connected to the inputs which allows adjusting the output voltage to the measuring means with the preselected input levels to the electronic device 2.

According to the invention, the electronic device 2 has second storage means 13 fit to store the data relative to the signals coming from the peripheral 3 through the inputs 10a, 10b, and 10c and to keep them stored for some time until their download and transmission to the management and control center 5.

Also according to the invention, the electronic device 2 has third data storage means 14, fit to store, as shown later on, the operating parameters and logic of the electronic device 2.

Preferably, but not necessarily, the second and third storage means 13 and 14 consist of rewritable memories of the EEPROM kind.

The management of the electronic device 2 is entrusted to a control unit 15 electronically connected to the inputs 10, the outputs 11, the storage means 13 and 14, and to the signal generating means 12.

These latter ones preferably, but not necessarily, consist of a GSM modem which allows the signal transmission via Ethernet.

In distinct embodiments the modem could be of a different type and suitable, for example, for the connection of the electronic device 2 to the Internet, or for communications of the GPRS or UMTS kind.

At last, the electronic device 2 comprises a power supply unit 16 necessary to its operation to which is usually associated an buffer battery 17 for the preservation of the data in the control unit 15 in the event of power supply transients.

The network 1 so far described with reference to fig. 1 is managed and controlled by a method which, for reasons of simplicity it refers to a single peripheral 3, basically has the phases described as follows.

The electronic device 2 transmits, through communication means 12, a message to the service center 4, which conveys it to the management and control center 5.

The transmitted message could belong to the alarm and/or event signal category, as it is better shown later on, or it could be a response message to the request, previously arrived at the management and control center 5, for sending the data contained in the second storage means 13.

The alarm and/or event signal generating logic mode, as already said, will be better described later on, while it can be already assumed that such messages are of the SMS kind.

As it is known, the SMS messages consist of an alphanumeric characters' sequence whose transmission turns out to be particularly effective as far as the duration and consequently the engagement of the transmission channels turns out to be remarkably short and inexpensive.

As previously said, such messages coming from the electronic device 2 are forwarded to the management and control center 5 by the service center 4.

Said messages are acquired by the management and control center 5 through reception means 6, as illustrated in fig. 2, which for example consist of a demodulator, in order to be forwarded and processed by the processing means 7.

The processing of such information allows at first to identify which among the electronic devices 2 has sent the message, thus allowing the decoding of their content and lastly the storage of said content into the first storage means 8.

The identification phase allows recognizing which among the electronic devices 2 and therefore which peripheral 3 has sent the message, for example through the reading of an ID code contained inside the SMS message and assigned to each device during the installation phase.

On the basis of the information processing carried out by the processing means 7, then the management and control center 5 sends through the transmission means 9 a possible response message to the electronic device 2. The message sent from the management and control center 5, it too advantageously being of the SMS kind, can be a status request signal of the electronic device 2, and consequently a status request of the associated peripheral 3.

This corresponds to the transmission request of the data present in the second storage means 13 of the respective electronic device 2.

As an alternative, the message transmitted from the management and control center 5 to the electronic device 2, can be a command fit to modify the operating parameters of the same device 2, which corresponds to the content modification of the third storage means 14.

This is achieved through a cycle of partial or total rewriting of the EEPROM memory.

Specifically, the operating parameters stored in the third storage means 14 are fit to define the alarms or events generating logics on the basis of the signals acquired from the inputs 10.

For example, with reference to the control of a boiler, a logic can be defined so to generate an alarm signal which occurs when the input associated to the burner is active, that is on, and the pressure of the hydraulic circuit falls within a predetermined range considered of good operation, but at the same time the temperature of the environment to be heated measured by a further input instead of increasing it decreases.

In this specific example, the operating parameters' modification command consists of a series of instructions which define the logic operations for the alarm signal generation, said operations being stored through the programming of the third storage means 14.

As well referring to such example, the parameters' modification command can also consist in reprogramming the third storage means 14 in order to redefine the pressure range values considered of good operation.

It is thus possible at any time to vary such ranges as also redefining the alarm signal generating logic.

Always referring to such example, it can also be provided that concurrently to the alarm signal for the management and control center 5 a signal for the output 11 towards the peripheral 3 be generated, which corresponds to the burner's switching off and thus to the boiler's turning off.

It is obvious that the alarm and/or event signals generating logics' reprogramming operations, or the modification of the ranges for the various magnitudes is carried out by the remote station consisting of the management and control center 5 without having to reach the place where the peripheral 3 is located.

This is made possible, according to the invention, by the presence of the second and third storage means 13 and 14 respectively of the electronic device 2.

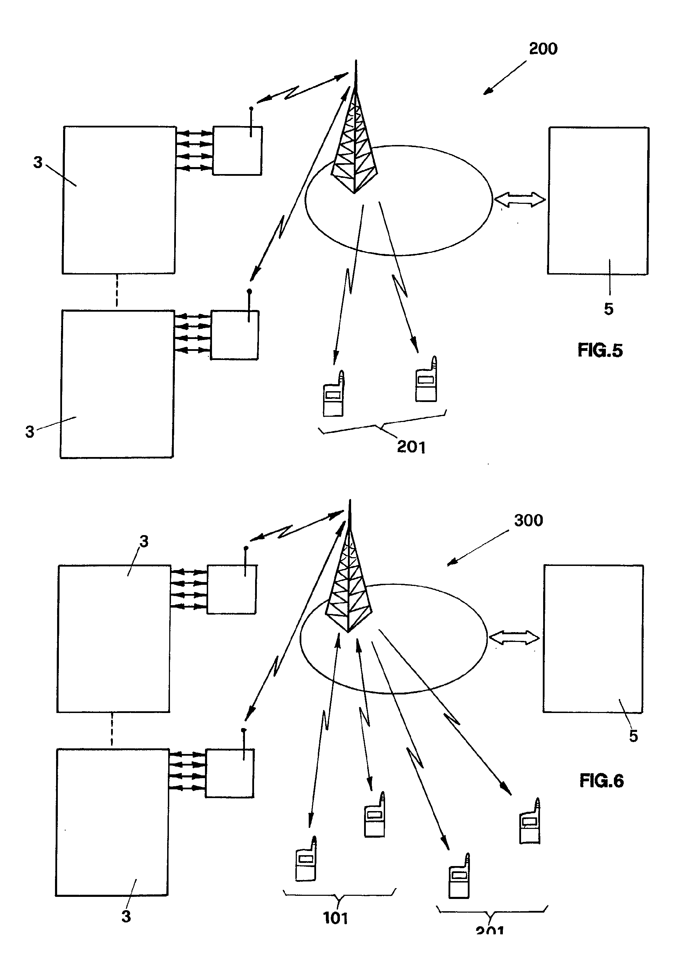

The peripherals' network 1 and its management so far described with reference to fig. 1 can be expanded according to different embodiments, as illustrated in figs. 4 to 6.

More specifically, in fig. 4 a network is explained, generally indicated with the number 100, which differs from the previously described network 1 because it comprises some access devices, generally indicated with the number 101, that allow establishing a bidirectional communication of transmittable messages with the service center 4 which conveys them to the management and control center 5.

Even for such embodiment a radio link communication of the GSM kind has been conveniently illustrated.

As a matter of fact, such access devices 101 usefully consist of cellular phones which, as it is well known, are suitable for the transmission as well as the reception of SMS messages.

The access devices 101 are available to the user U of the peripheral 3 and are uniquely identifiable by an ID number consisting, in the case of cellular phones, of a telephone number.

In different embodiments, the access device 101 for example can consist of a computer connected, through modem, to the telephone network.

The cellular phone solution turns out to be even more preferable due to its flexibility in the operation by the user U, who, at any time and from any area covered by the signal, can send or receive SMS messages.

The management method of the network 100 with such configuration will obviously have to provide the messages management from and to the access devices 101.

To begin with, both the electronic devices 2 and the access devices 101 can transmit SMS messages to the service center 4 which conveys them to the management and control center 5.

As for the previous case, the management and control center 5 would have to identify the sender of the message, in such case differentiating however the origin between the electronic devices 2 and the access devices 101.

Such identification can be carried out by considering the uniqueness of the telephone number associated to the user U and the specific ID number which gets assigned to each electronic device 2 during the installation phase.

The possibility of accessing the management and control center 5 through the access devices 101, allows the user U to send SMS messages which can be information request messages or command messages for the activation of specific functions for the peripheral 3.

Hence, for example, a SMS message can be provided for the status request of the peripheral 3 or a SMS message for the request to the managing and control center 5 of a special service like the boiler's turning on or off, or else for the activation of any other kind of function such as the chrono-thermostat, the anti-legionella function and alike.

In the case of status request, the user U sends a coded message to the managing and control center 5 that, once it recognizes the user U and its associated electronic device 2, sends in turn a status request message to the electronic device 2.

In this manner, the electronic device 2 will send the requested data to the managing and control center 5 that at last will see to forward them to the user U for their visual display on the cellular phone's screen.

In fig. 5 another alternative to network of fig. 1 is illustrated, generally indicated with the number 200, where signalling devices, generally indicated with the number 201, are provided and for reasons of simplicity they are represented by cellular phones.

Such signalling devices 201 carry out a unidirectional communication of messages coming from the managing and control center 5.

These signalling devices 201 are associated, for example, to an emergency unit which can be warned when a peripheral 3 creates specific alarm signals, like for example fire or overheating.

The emergency unit can thus be a service center or, in case of emergency, a fire-fighting squad.

In such case, the function carried out by the signalling devices 201 is just that of receiving information, usually alarm signals, from the managing and control center 5 together with additional information such as for example the place where to intervene, the type of peripheral which to operate on as well as the kind of failure detected.

It is obvious from what has been said so far that the signalling device 201 could consist of sound alarm systems as well or other known types of signalling devices, for example a monitor or a fax.

In order to allow said operation, during the installation phase at feast one user ID number is associated to each electronic device 2, in our case it is the phone number towards which the alarm messages need to be forwarded.

Hence, for example, in case of overheating alarm signal it can be provided that an alarm message is forwarded to the service center nearest to the installed boiler.

In fig. 6 a further implementing alternative to the invented network is illustrated, generally indicated with the number 300, which achieves a combination of the two networks 100 and 200 previously described in fig. 4 and 5 respectively.

In such case the network comprises the peripheral 3 of the access devices 101 from the users U and the signalling devices 201 for the emergency units.

In this case, in the network's management all the previously described functions must be provided.

First, the messages' sender must be identified among the electronic devices 2 and the access devices 101, and therefore the possibility of sending either commands to the electronic device 2 or messages to the access device 101 and to the signalling devices 201.

In order to do this at the managing and control center 5 a software is installed for the programming and the remote configuration of each electronic device 2 associated to the peripherals 3 through a modification, as already said, of the content of the third storage means 14.

It must be noticed that the presence of second storage means 13 of the electronic device 2 allow carrying out some samplings on the acquired input values storing their figures until their completion. Such data can be possibly transmitted to the managing and control center 5 any time the memory is full or whenever it is requested by the same managing and control center 5.

The sampling modes, meaning duration and period, can also be set during the installation phase or at a subsequent time thanks to the sending of commands from the managing and control center 5 to the electronic device 2.

The data coming from the sampling can be advantageously used by the managing and control center 5 to be stored into the first storage means 8 and so to create a database where the data relative to each peripheral 3 are collected.

This can be useful for the installer in order to evaluate the performance of the peripheral 3 both during the installation and the testing operations, and also afterwards during the monitoring of its operation.

Hence, for example, said field test operations are made easier and are managed with less difficulty through remote interventions from the managing and control center 5.

It is also obvious that the input signals acquisition of the peripheral 3 belonging to the same geographical area can be exploited for the performance evaluation of the different peripherals 3 with reference to their geographical location.

The managing and control center 5 can in fact access the data contained into the database 8 which can be used for cross checks during the evaluations of the operations of the peripherals 3 according to the installation zone.

It is evident from what has been previously said that the invention's peripheral network together with the method for its management accomplishes said advantages and objects.

In the implementing phase, further alternatives could be resorted to the network.

Such variants, for example, could consist of a different type of the access and signalling devices, or of a different design of communication, especially of the electronic device.

The foregoing and further not described or illustrated alternatives, when falling within the invention's concept recited in the appended claims, must be anyhow considered protected by this patent.

## Claims

1. A network (1, 100, 200, 300) of a peripheral (3) for residential - and/or industrial complexes of the type which comprises:
- at least one electronic device (2) associated to each of said peripherals (3) equipped with inputs (10) and outputs (11) for the acquisition of signals coming from said peripherals (3) and for the sending of command signals to said peripherals (3), said electronic device (2) being fit to establish a bidirectional communication of Ethernet or cable transmittable messages with:
- a service center (4) for the reception, transmission, and management of said messages;
- and with:
- a data management and control center (5) connected to said service center (4) equipped with reception means (6) of said messages, data processing means (7), first data storage means (8), and commands transmission means (9) via Ethernet or cable,
**characterized in that** said at least one electronic device (2) has second storage means (13) fit to store the signals coming from the peripheral (3) which is associated to, and third storage means (14) of data modifiable through said commands coming from such data management and control center (5), said third storage means (14) being fit to store the operating parameters of said at least one electronic device (2).

2. The network (100, 300) according to claim 1, **characterized by** comprising one or more access devices (101) for the users (U) of said network (100, 300), fit to establish a bidirectional communication of Ethernet and/or cable transmittable messages with said at least one electronic device (2), and/or with said service center (4), and/or with said data management and control center (5).

3. The network (200) according to claim 1, **characterized by** comprising one or more signalling devices (201) associated to at least one emergency unit fit to establish a unidirectional communication of messages coming from the managing and control center (5).

4. The network (300) according to claim 1, **characterized by** comprising one or more signalling devices (201) associated to at least one emergency unit fit to establish a unidirectional communication of messages coming from the managing and control center (5).

5. The network (100, 300) according to claim 2, **characterized in that** said one or more access devices (101) consist of a cellular phone.

6. The network (100, 300) according to claim 2, **characterized in that** said one or more access devices (101) consist of a computer.

7. The network (100, 300) according to claim 2, **characterized in that** said one or more access devices (101) consist of a fixed phone.

8. The network (1, 100, 200, 300) according to any of claims 1 to 4, **characterized in that** said transmittable messages are of the SMS kind.

9. The network (1, 100, 200, 300) according to any of claims 1 to 4, **characterized in that** said transmittable messages are of the GPRS kind.

10. The network (1, 100, 200, 300) according to any of claims 1 to 4, **characterized in that** said transmittable messages are of the UMTS kind.

11. An electronic device (2) used in a network (1, 100, 200, 300) of the peripherals (3) according to any of the previous claims, **characterized by** comprising:
- at least one input (10) connected to said peripheral (3) for the acquisition of the signals coming from same peripheral (3);
- at least one output (11) for the sending of command signals for said peripheral (3);
- signals generating means (12) of bidirectional communication transmittable via Ethernet and/or cable;
- second storage means (13) fit to store said input signals;
- third storage means (14) fit to hold the operating parameters of the electronic device (2), said data being suitable for being modified by commands coming from said management and control center (5);
- a control unit (15) connected to said at least one input (10), to said at least one output (11), to said signals generating means 12, and to said second and third storage means (13, 14).

12. The electronic device (2) according to claim 11, **characterized in that** said second and third storage means (13, 14) consist of an EEPROM memory.

13. The electronic device (2) according to claim 11, **characterized in that** said generating means (12) of bidirectional signals comprise a modem.

14. The electronic device (2) according to claim 13, **characterized in that** said modem is of the GSM type.

15. A management and control method of a network (1) according to claim 1, **characterized in that** the following phases are provided:
- transmitting said messages from said at least one electronic device (2) to said service center (4) which conveys them to said management and control center (5);
- processing said messages from said management and control center (5) for;
- identifying the sender of said message among said electronic devices (2);
- decoding the received message;
- storing said messages into said first storage means (8);
- transmitting a prospective message from said management and control center (5) to said electronic device (2) by said service center (4).

16. The method according to claim 15, **characterized in that** said sender's identification phase allows recognizing the electronic device (2) associated to the peripheral (3).

17. The method according to claim 15, **characterized in that** said decoded message coming from one of said electronic devices (2) is an alarm and/or event signal.

18. The method according to claim 17, **characterized in that** said alarm and/or event signal is generated on the basis of the operating parameters contained into said third storage means (14).

19. The method according to claim 15, **characterized in that** said decoded message coming from one of said electronic devices (2) is a response signal to a request of transmission of the parameters relative to the input signals coming from said peripherals (3) held in said second storage means (13).

20. The method according to claim 15, **characterized in that** said decoded message coming from one of said electronic devices (2) is a positive or negative acknowledgement signal to a command previously sent from said management and control center (5) to said electronic device (2).

21. The method according to claim 15, **characterized in that** said message transmitted from said management and control center (5) to said electronic device (2) is a command fit to modify the operating parameters of the electronic device (2) contained into said third storage means (14).

22. A management and control method of a network (100) according to claim 2, **characterized in that** the following phases are provided:
- transmitting said messages from said at least one electronic device (2) and/or from said access devices (101) to said service center (4) which conveys them to said management and control center (5);
- processing said messages from said management and control center (5) for;
- identifying the sender of said message among said electronic devices (2) and said access devices (101);
- decoding the received message;
- storing said messages into said first storage means (8);
- transmitting a prospective message from said management and control center (5) to said electronic device (2) by said service center (4);
- transmitting a prospective message from said management and control center (5) to one of said access devices (101) by said service center (4).

23. The method according to claim 22, **characterized in that** said sender's identification phase allows recognizing the electronic device (2) associated to the peripheral (3) or recognizing the access device (101) associated to the user (U) who transmitted the message.

24. The method according to claim 22, **characterized in that** said decoded message is coming from one of said electronic devices (2) and it is an alarm and/or event signal.

25. The method according to claim 24, **characterized in that** said alarm and/or event signal is generated on the basis of the operating parameters contained into said third storage means (14).

26. The method according to claim 22, **characterized in that** said decoded message coming from one of said electronic devices (2) is a response signal to a request of transmission of the parameters relative to the input signals coming from said peripherals (3) held in said second storage means (13).

27. The method according to claim 22, **characterized in that** said decoded message is coming from one of said electronic devices (2) and it is a positive or negative acknowledgement signal to a command previously sent from said management and control center (5) to said electronic device (2).

28. The method according to claim 22, **characterized in that** said decoded message is coming from one of said access devices (101) and it is an information request signal or a command for one of said peripherals (3).

29. The method according to claim 22, **characterized in that** said message transmitted from said management and control center (5) to said electronic device (2) is a command fit to modify the operating parameters of the electronic device (2) contained into said third storage means (14).

30. A management and control method of a network (200) according to claim 3, **characterized in that** the following phases are provided:
- transmitting said messages from said at least one electronic device (2) to said service center (4) which conveys them to said management and control center (5);
- processing said messages from said management and control center (5) for;
- identifying the sender of said message among said electronic devices (2);
- decoding the received message;
- storing said messages into said first storage means (8);
- transmitting a prospective message from said management and control center (5) to said electronic device (2) by said service center (4);
- transmitting a prospective message from said management and control center (5) to one of said signalling devices (201) by said service center (4).

31. The method according to claim 30, **characterized in that** said sender's identification phase allows recognizing the electronic device (2) associated to the peripheral (3) which transmitted the message.

32. The method according to claim 30, **characterized in that** said decoded message is coming from one of said electronic devices (2) and it is an alarm and/or event signal.

33. The method according to claim 32, **characterized in that** said alarm and/or event signal is generated on the basis of the operating parameters contained into said third storage means (14).

34. The method according to claim 30, **characterized in that** said decoded message is coming from one of said electronic devices (2) and it is a response signal to a request of transmission of the parameters relative to the input signals coming from said peripherals (3) held in said second storage means (13).

35. The method according to claim 30, **characterized in that** said decoded message is coming from one of said electronic devices (2) and it is a positive or negative acknowledgement signal to a command previously sent from said management and control center (5) to said electronic device (2).

36. The method according to claim 30, **characterized in that** said message transmitted from said management and control center (5) to said electronic device (2) is a command fit to modify the operating parameters of the electronic device (2) contained into said third storage means (14).

37. A management and control method of a network (300) according to claim 4, **characterized in that** the following phases are provided:
- transmitting said messages from said at least one electronic device (2) and/or from said access devices (101) to said service center (4) which conveys them to said management and control center (5);
- processing said messages from said management and control center (5) for;
- identifying the sender of said message among said electronic devices (2) and said access devices (101);
- decoding the received message;
- storing said messages into said first storage means (8);
- transmitting a prospective message from said management and control center (5) to said electronic device (2) by said service center (4);
- transmitting a prospective message from said management and control center (5) to one of said access devices (101) by said service center (4);
- transmitting a prospective message from said management and control center (5) to one of said signalling devices (201) by said service center (4).

38. The method according to claim 37, **characterized in that** said sender's identification phase allows recognizing the electronic device (2) associated to the peripheral (3) or recognizing the access device (101) associated to the user (U) who transmitted the message.

39. The method according to claim 37, **characterized in that** said decoded message is coming from one of said electronic devices (2) and it is an alarm and/or event signal.

40. The method according to claim 39, **characterized in that** said alarm and/or event signal is generated on the basis of the operating parameters contained into said third storage means (14).

41. The method according to claim 37, **characterized in that** said decoded message is coming from one of said electronic devices (2) and it is a response signal to a request of transmission of the parameters relative to the input signals coming from said peripherals (3) held in said second storage means (13).

42. The method according to claim 37, **characterized in that** said decoded message is coming from one of said electronic devices (2) and it is a positive or negative acknowledgement signal to a command previously sent from said management and control center (5) to said electronic device (2).

43. The method according to claim 37, **characterized in that** said message transmitted from said management and control center (5) to said electronic device (2) is a command fit to modify the operating parameters of the electronic device (2) contained into said third storage means (14).

44. The method according to claim 37, **characterized in that** said decoded message is coming from one of said access devices (101) and it is an information request signal or a command for one of said peripherals (3).
